Europäisches Patentamt

European Patent Office

Office européen des brevets

(11) Veröffentlichungsnummer: **0 210 443**
A1

(12) **EUROPÄISCHE PATENTANMELDUNG**

(21) Anmeldenummer: 86108750.0

(22) Anmeldetag: 26.06.86

(51) Int. Cl.⁴: **C 22 B 60/02**
C 01 G 56/00, G 21 C 19/46

(30) Priorität: 02.07.85 LU 85988

(43) Veröffentlichungstag der Anmeldung:
04.02.87 Patentblatt 87/6

(84) Benannte Vertragsstaaten:
AT BE CH DE FR GB IT LI LU NL SE

(71) Anmelder: **EUROPÄISCHE ATOMGEMEINSCHAFT
(EURATOM)**
**Bâtiment Jean Monnet Plateau du Kirchberg Boîte
Postale 1907
L-1019 Luxembourg(LU)**

(72) Erfinder: **Koch, Lothar
Rieslingweg 8
D-7504 Weingarten(DE)**

(72) Erfinder: **Molinet, Roger
Bahnhofstrasse 78
D-7515 Linkenheim(DE)**

(72) Erfinder: **Adachi, Takeo Jap. Atom. Energy Res. Inst.
Tokai
Tokai-mura Maka-gun
Ibaraki-ken(JP)**

(74) Vertreter: **Weinmiller, Jürgen
Lennéstrasse 9
D-8133 Feldafing(DE)**

(54) Verfahren zur Abtrennung von Americium aus Abfällen bestrahlter Kernbrennstoffe.

㉛ Dreiwertiges Americium wird oxidiert (z.B. Natriumpersulfat oder elektrochemisch). In alkalischer Lösung wird es auf fünfwertiges Americium eingestellt (z. B. durch Reduktion überschüssigen sechs- bzw. siebenwertigen Americiums). Lanthanide werden in alkalischer Lösung komplexiert (z. B. durch EDTA, was eine Ausfällung verhindert) und selektiv vom fünfwertigen Americium extrahiert (z. B. durch Oxin in Chloroform). Das zurückbleibende Americium wird aus der alkalischen Lösung, die frei von dreiwertigen Lanthaniden ist, nach bekannten Verfahren oder nach Reduktion zu dreiwertigem Americium analog zu den Lanthaniden isoliert.

## Verfahren zur Abtrennung von Americium aus Abfällen bestrahlter Kernbrennstoffe

Es ist bekannt, Americium aus Abfällen bestrahlter Kernbrennstoffe als dreiwertiges Element abzutrennen. Dabei werden aber auch die dreiwertigen Lanthaniden mitabgetrennt.

Die Erfindung besteht darin, dieses Mitabtrennen von Lanthaniden zu verhindern, indem man zuerst das dreiwertige Americium oxidiert, dann in alkalischer Lösung die Lanthaniden komplexiert und selektiv vom fünfwertigen Americium extrahiert, wonach das Americium nach an sich bekannten Verfahren isoliert wird.

### Beispiel 1

Zu einer Probe mit 500 µg Am in 0,3 ml und 0,1 M $HNO_3$ werden gegeben :

- 100 mg $Na_2S_2O_8$
- anschließend 30 Min. Erwärmen bei 90°C ($Am^{3+} \rightarrow AmO_2^{++}$)
- Einrühren von 500 µl M EDTA (dabei reduziert $AmO_2^{++} \rightarrow AmO_2^{+}$)
- Einstellen mit 1 M NaOH auf pH = 14
- Extraktion von Lanthaniden (und nochtoxidiertem $Am^{3+}$) mit 0,1 M Oxin in $CHCl_3$.

Durch γ-spektrometrische Analyse wurde gefunden, daß 7% (als $Am^{3+}$) extrahiert werden und dementsprechend 93% (als $AmO_2^{+}$) in wässriger Phase verbleibt.

Um die Strahlenbelastung beim Versuch zu reduzieren, wurden im folgenden nur 0,4% des Am im Versuch A eingesetzt. Es zeigte sich, daß wider Erwarten der Extraktionskoeffizient massenabhängig ist (wahrscheinlich Reduktion des Am an Phasengrenzflächen). Dies erklärt, warum in den folgenden Versuchen nur 80% extrahiert wurden.

Beispiel 2

Trennung Eu von Am.

Zu einer Mischung $^{241}$Am:Eu = 1:1 (markiert mit 1% Eu-154)
werden gegeben :

- 100 mg $Na_2S_2O_8$
- danach werden 100 µl 1 M EDTA zugesetzt
- mit 1 M NaPH wird auf pH = 14 eingestellt
- $Am^{3+}$ und $Eu^{3+}$ werden mit 0,1 M Oxin in $CHCl_3$ extrahiert.

Die $\gamma$-spektrometrische Analyse zeigt, daß in einem Extraktionsschritt 94% Eu und 20% Am (als $Am^{3+}$) extrahiert werden und
dementsprechend 80% Am (als $AmO_2^+$) und 6% Eu in der wässrigen
Phase verbleiben.

Bei Wiederholung der Extraktion lassen sich die Am-Ausbeute
und die Trennung von Eu verbessern. Dazu werden Am und Eu
aus der organischen Phase mit 0,2 M $HNO_3$ re-extrahiert und
nach erfolgter Oxidation des $Am^{3+}$ (wie oben beschrieben) erneut bei pH = 14 extrahiert.

Nach einer zweiten Extraktion beträgt die Am-Ausbeute in der
wässrigen Phase 96% (4% sind noch mit dem Eu extrahiert worden). Letzteres ist mit 99% vom Am abgetrennt worden.

Beispiel 3

Es wurde eine Brennstoffprobe (30 GWd/t Abbrand) nach dem
oben beschriebenen Verfahren behandelt. Sie enthielt 0,15 mg
Brennstoff. Uran und Plutonium wurden nach bekannten Verfahren
abgetrennt.

Nach dem ersten Extraktionsschritt waren 15% Am den Lanthaniden gefolgt und 85% verblieben in der wässrigen Phase. Eine
Wiederholung des Extraktionsverfahrens brachte wie oben eine
verbesserte Ausbeute.

## Patentanspruch

Verfahren zur Abtrennung von Americium aus Abfällen bestrahlter Kernbrennstoffe, dadurch gekennzeichnet, daß man zuerst das dreiwertige Americium oxidiert, dann in alkalischer Lösung die anwesenden Lanthaniden komplexiert und selektiv vom fünfwertigen Americium extrahiert, wonach das Americium nach an sich bekannten Verfahren isoliert wird.

**EUROPÄISCHER RECHERCHENBERICHT**

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 77, Nr. 16, 16. Oktober 1972, Seite 453, Zusammenfassung Nr. 108062a, Columbus, Ohio, US; K. WATANABE et al.: "Separation of plutonium and curium from irradiated americium by solvent extraction using HDEHP [bis(2-ethyl-hexyl)hydrogen phosphate]", & NIPPON GENSHIRYOKU GAKKAISHI 1972, 14(7), 326-30 * Insgesamt * | 1 | C 22 B 60/02<br>C 01 G 56/00<br>G 21 C 19/46 |
| | --- | | |
| A | US-A-2 934 403 (M. ADER) | | |
| | --- | | |
| A | US-A-2 577 097 (L.B. WERNER) | | |
| | --- | | **RECHERCHIERTE SACHGEBIETE (Int Cl 4)** |
| A | US-A-2 683 655 (D.F. PEPPARD) | | C 22 B<br>C 01 G |
| | --- | | |
| A | EP-A-0 010 044 (COMMISSARIAT A L'ENERGIE ATOMIQUE) | | |
| | ---       -/- | | |

Der vorliegende Recherchenbericht wurde für alle Patentansprüche erstellt.

| Recherchenort DEN HAAG | Abschlußdatum der Recherche 03-11-1986 | Prüfer JACOBS J.J.E.G. |
|---|---|---|

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | HYDROMETALLURGY, Band 4, Nr. 1, Januar 1979, Seiten 1-20, Elsevier, Amsterdam, NL; I.L. JENKINS: "Solvent extraction chemistry in the atomic energy industry - A review" * Seiten 12,13 * | | |

-----

RECHERCHIERTE SACHGEBIETE (Int Cl 4)

Der vorliegende Recherchenbericht wurde für alle Patentansprüche erstellt

| Recherchenort | Abschlußdatum der Recherche | Prüfer |
|---|---|---|
| DEN HAAG | 03-11-1986 | JACOBS J.J.E.G. |